# EUROPEAN PATENT SPECIFICATION

(11) **EP 2 744 168 B1**
(45) Date of publication and mention of the grant of the patent: **23.08.2017**
(21) Application number: 12382501.0
(22) Date of filing: 13.12.2012
(51) Int. Cl.: H04L 29/06, H04L 29/08

(54) **SYSTEM, METHOD AND LIVE STREAMING OPTIMIZER SERVER FOR LIVE CONTENT DISTRIBUTION OPTIMIZATION OVER A CONTENT DELIVERY NETWORK**
SYSTEM, VERFAHREN UND LIVE-STREAMING-OPTIMIERUNGSSERVER ZUR OPTIMIERUNG DER VERTEILUNG VON LIVE-INHALT ÜBER EIN INHALTSBEREITSTELLUNGSNETZWERK
SYSTÈME, PROCÉDÉ ET SERVEUR D'OPTIMISATION DE DIFFUSION EN CONTINU ET EN DIRECT POUR OPTIMISER LA DISTRIBUTION DE CONTENU EN DIRECT SUR UN RÉSEAU DE DISTRIBUTION DE CONTENU

(43) Date of publication of application: 18.06.2014
(73) Proprietor: Telefonica S.A., 28013 Madrid (ES)
(72) Inventor: Contreras Murillo, Luis Miguel, 28013 Madrid (ES); Rodríguez Martínez, Juan, 28013 Madrid (ES)
(74) Representative: Carlos Hernando, Borja

(56) References cited:
- US-A1- 2012 209 942
- US-B1- 7 219 153

## Description

### Field of the art

The present invention generally relates to systems and methods for network content delivery, and more particularly to a system, a method and a live streaming optimizer server for live content distribution optimization over a content delivery network.

### Prior State of the Art

Nowadays there is a clear shift towards a TV service demand based on the delivery of video content by means of the ubiquitous HTTP protocol. This is due, in part, to the new capabilities offered by the proliferation of video-capable user devices (smartphones, connected TVs, tablets, Xbox, Mediabox, etc.), and also due to the new commercial offers being launched by the Over-the-top (OTT) providers, service known as Live TV OTT or Live OTT.

The impact in the network of this new way of consuming TV is a dramatic increase on the consumed bandwidth. In order to avoid the network congestion while attending the increasing customer demand, it is necessary to implement some mechanism which could efficiently manage the users' requests minimizing the capacity needs (i.e., in a cost-efficient way), while avoiding network congestion.

This invention aims to solve and avoid the current network congestion derived from the bandwidth explosion caused by the distribution of Live Streaming or Live TV in current telecom networks when using HTTP. When those contents are delivered in unicast as in the case of CDN content distribution, it motivates one distinct flow per customer request, as is the case of contents accessed through HTTP requests directly from an end user device without the intermediation of a set-top box.

### Multicast-based content delivery:

In the last years, Live TV solutions offered by telecom operators have been implemented under the concept of IPTV. Traditional IPTV services run over a telecom operator managed network, using multicast capabilities to transport the TV flow to the customer premises.

Conceptually, IP multicast represents a receiver centric architecture. A number of receivers, located anywhere in the network, subscribe to a content in the form of a multicast session group. In the case of IPTV networks, this subscription message is sent by the set-top-box triggered by an end user command.

The content is distributed by means of a particular data stream creating a multicast flow. A single copy of such data stream is carried on every link in the network along the multicast path dynamically created to reach the interested receivers. The data stream is replicated on the routers where the multicast path topologically diverges.

One of the identified problems and limitations is that the multicast source injecting the data stream to the network does not maintain any subscription list of interested receivers. The source simply sends the data stream to an arbitrary group of hosts represented by an IP multicast address. The set-top-box indicates interest on receiving certain content by explicitly joining the multicast group. The Internet Group Management Protocol (IGMP) for IPv4 (in its different versions), or the Multicast Listener Discovery (MLD) protocol for IPv6 (with its versions) defines the control messages for managing the group membership process. Multicast protocols distinguish between multicast receiver (or host part) and multicast router (or network part) functionalities. Basically, the host part is devoted to the group subscription management, while the router part is focused on building and maintaining the multicast tree.

On the network side, the routers make use of different protocols to dynamically build and maintain the multicast distribution tree from the multicast source to the final set of receivers.

Protocol Independent Multicast (PIM) [RFC 4601] is the most commonly deployed protocol in commercial networks. PIM uses the unicast routing information (independently of the conventional routing protocol used to obtain it, i.e., OSPF, BGP, IS-IS, etc.) to build a loop-free multicast distribution tree.

### Unicast-based content delivery:

As an alternative way of getting TV services, either those provided by the telecom operator or by a third party, the CDN emerges as the infrastructure able to support such a massive service by means of streaming, which makes possible to send the TV content to the viewer over a unicast connection, typically using HTTP over TCP [1]. The HTTP protocol provides an ubiquitous connectivity capability because any device connected to the Internet will be able to access the demanded TV content. Examples of these alternatives are Microsoft Smooth Streaming, or Apple HTTP Live Streaming (HLS).

The way of getting content is through adaptive streaming, where an end user sends an HTTP request to an HTTP server to retrieve short-duration segments of some certain content, a live TV channel in this case.

There exist two basic mechanisms for CDN:
- In the HTTP redirect mechanism, once the HTTP Get message from the host is received by the CDN Controller (or Request Routing function), this Controller decides the CDN End Point better suited to deliver the content, and sends back an HTTP Redirect message to the host, in order to indicate the host that the request will be attended by the identified CDN End Point [7].
- In the DNS name resolution mechanism, the DNS server informs the host about the CDN End Point to serve the request, based on the IP address of the host; afterwards, the host requests the content directly to the CDN End Point. Nevertheless, CDN based on DNS solutions may experience a slow-down: This is due to the fact that when an End-Point requests certain CDN content, the DNS may inform to the host about the most suitable CDN server to provide it. However, the CDN gives an IP (sometimes multiple) that it feels is closest to whoever is requesting it (the DNS server). The CDN only sees the DNS server of the requester, not the requester itself. It therefore gives an IP that it thinks is closest based on the DNS server making the query. There are a few proposals floating around out there to resolve this limitation in DNS, but at this point there's nothing in place

The description of the invention will be focused on the HTTP redirect mechanism for simplicity, but the method is equally applicable to the DNS resolution mechanism, as well.

Some issues arise, however, with the distribution of TV contents by using multicast. IPTV solutions require of a dedicated infrastructure (e.g., set-top box at the customer premises) to provide the service, handling multicast protocols end-to-end. Furthermore, the IPTV solution is not able to cope with TV contents provided by external third parties, as they are not part of the channels bouquet of the IPTV platform managed by the telecom operator. Finally, they are not able to deliver content as response to HTTP requests (intrinsically unicast) as the multicast platform does not handle this kind of traffic (e.g., the traffic from a tablet does not pass through the set-top box).

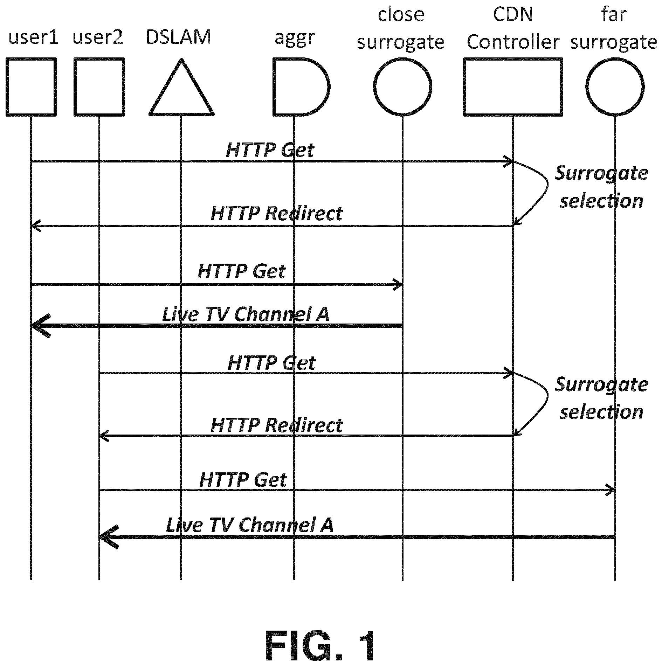

On the other hand, the unicast nature of HTTP requests imposes some degree of inefficiency to the TV distribution in terms of consumed bandwidth. Every user requesting a certain TV channel will cause the injection of a distinct flow in the network, thus replicating the same content end-to-end. A CDN infrastructure can be used to mitigate this effect, but the number of replicated flows cannot be negligible among the CDN End Point and the user access at the border of the network. Figure 1 shows this problem.

In the Figure 1 User1 sends an HTTP GET Request of a certain Live OTT channel which is received by an HTTP Request Routing function within the control entity of a CDN. This Routing function sends back an HTTP Redirect Response (Status-Code 302) informing the User1 about the most preferred CDN End-Point or Surrogate from where directly obtain the content. The identification process of that Surrogate is internal to the CDN, not taking into account any network-related information. User1 will request the content from the identified Surrogate, creating a unicast flow between User1 and that Surrogate. Later on, User2, which is attached to the same access node as User1, could trigger a new request of the same Live OTT content following the same procedure. In this case the CDN could identify a distinct Surrogate or not, but in any case a different unicast flow will be created to distribute the same live content as before. Then, one flow per user will be created across the entire path between the user accesses to the CDN.

The full capabilities of the CDN are however of limited usage. For instance, the caching capabilities typically provided by a CDN do not make sense in a Live OTT environment because of the live nature of the content. Then, massively deploying CDN nodes, delivering a multitude of live OTT contents, with different coding standards to adapt the content to a variety of resolution screens (smartphones, tablets, TV, etc.) and quality demands (low, standard, and high definition) is not an efficient solution, consuming in fact a huge amount of bandwidth in the operator's network. The idea of deploying numerous CDN End Points close to network edge is impractical due to the complexity and inefficiency of the solution, as very much infrastructure is required along the network, including housing space, power sources, switches, CDN endpoints, etc.

The proposal in WO 2002054698 *'Streaming media subscription mechanism for a content delivery network'* provides a solution to enhance the CDN distribution network. It describes a network of content reflectors within the CDN infrastructure which can serve content to a CDN edge node in case that node does not contain the requested content. On contrary, the present invention proposes the use of LISTO Servers which are not part of the CDN infrastructure, but of the transport network infrastructure. The LISTO Servers have distribution (streaming) capabilities but are not managed by the CDN. They merely act as proxies to subscribe content, instead of the end user, in such a way that only one flow is distributed towards the network edge. This is beneficial not only to the network operator, but also to the CDN operator, since much less resources are needed to serve a live OTT content in both operations. Furthermore, the LISTO Servers are topologically placed close to the end user, while the aforementioned reflectors are located between CDN end node and CDN origin server, thus helping on the internal distribution within the CDN. The invention here described aims to optimize the network operator network instead of optimizing the CDN network itself.

A different possible solution could be the transformation of the unicast request to a multicast request internally to the network. However, such solution would need the interception of the user request in order to determine the TV channel being requested, which could represent legal issues as the totality of the end user traffic should be inspected (driving then some additional needs for this solution, as packet inspectors and packet filters to determine the content requests). Furthermore, it would force the establishment of multicast states along the path, in such a way that some of the constraints of existing IPTV systems would not be totally avoided. Finally, in case of TV services offered by third parties, this would additionally imply inter-domain multicast distribution, increasing the complexity and manageability of the solution.

In this direction, the patent US 20110302320 *'Systems and methods for network content delivery'* also presents the possibility of distributing internally to the CDN the contents between CDN components in multicast. Whereas, in some way, the LISTO Server could be seen as a part of the CDN distribution elements, what the present invention proposes is a proxy functionality implemented by the LISTO Server to reduce the number of unicast flows towards the edge network, while maintaining the unicast nature of the delivered flow.

In order to implement a fully transparent solution, it is required to directly handle the unicast request looking for a more efficient solution by the development of new elements and functionalities internal to the network. The way of doing this could be by means of some lightweight proxy functionality allowing acting on behalf of the end user, from the network point of view, but at the same time appearing to the end user as part of the content distribution chain in a transparent way.

The idea of using a proxy has been already proposed in the past, for instance in patent US 8132218 '*Access*/*edge node supporting multiple video streaming services using a single request protocol',* for optimizing the distribution of video contents to improve the network efficiency (in this case by simplifying the number of TV delivery platforms). The proxy function is located at the DSLAM. However, that invention addresses different TV services being requested by means of a set-top-box mediation device, which intrinsically differs from the ubiquity provided by live streaming mechanisms, which do not require a mediation device for obtaining TV contents. Other proposals of using proxying methods have addressed e.g. advertisement customization [3], partial video caching for video streaming [9], or access to cached video [6], etc. However, in those cases the proxy elements are an integral part of the distribution network, the CDN in this case, and as such they are unaware of the underlying transport (IP or transmission based) network conditions. In this invention the proxy elements are a component of the transport network (operated by a telecom operator) instead of the content distribution network (potentially operated by a third party), and interwork with the distribution network through specific interfaces.

Another existing proxy-based solution proposal is the one described in WO 2010049876 *'System and method for sharing transparent proxy between ISP and CDN'.* There, a proxy is used in an ISP Network to minimize the incoming traffic from an external CDN. The user's request for some content are served from the proxy which then needs to intercept the user's request and process them. This procedure is intrinsically different to the one described in this invention, as the proxy in this invention proposal, the LISTO Server, only interacts with the end user as result of a dialogue between the LISTO instructor and the CDN controller (or the authoritative DNS, depending on the solution), in a transparent and passive way, since the user is re-directed to the LISTO Server.

Other prior state of the art proposals are US patent US-B1-7219153 'Methods and apparatus for distributing content' disclosing a method for distributing content using presence information to control the distribution of content within a network, and patent application US-A1-2012/209942 'System combining a CDN reverse proxy and an edge forward proxy with secure connections' that provides a proxy system to receive an HTTP request for content accessible over the Internet. As of the rest of prior art documents, in these two patents the elements used to provide or serve the content are part of the CDN infrastructure. In the present invention, as said before, the proposed proxy or LISTO server is part of the transport network infrastructure.

Moreover, the proposed proxy in patent application US-A1- 2012/209942 is an active proxy that processes and captures traffic and decides to perform a subscription in the name of an end user. The proposed LISTO server doesn't analyze traffic at all, the proposed LISTO server is controlled and instructed by a control element, the LISTO instructor, which is the responsible to communicate with the content delivery network controller, so the content delivery network controller in the present invention cannot control the LISTO server and therefore cannot manipulate it in an autonomous way.

### Summary of the Invention

The object of the present invention is to provide an entity internal to the network (under the telecom operator responsibility) which is able of requesting the live TV channel instead of the end users in a certain domain, and at the same time, it is able of delivering one copy of that TV channel per user in a transparent way. Summarizing, the proposed entity will act as a proxy for Live Streaming request in the network, and will act as a server from the end users point of view. This entity will be called live streaming optimizer (LISTO) server in the rest of the document.

To that end, the present invention relates, in a first aspect, to a system for live content distribution optimization over a content delivery network, the system as commonly used in the field comprising:
- at least one user provided with a computing device requesting a live media content; and
- a controller located in the distribution network of a content delivery network being adapted to receive said requesting and to transmit said requested live media content to said at least one user.

On contrary to the known proposals and in a characteristic manner, the system of the first aspect of the present invention comprises a live streaming optimizer (LISTO) server located in the transport network of said content delivery network and adapted to request said live media content to an identified content delivery network end point in a certain domain and adapted to transmit said live media content to said at least one user.

The LISTO server of the present invention is complemented with:
- a distribution network mediator located in said distribution network to interact with said controller and to redirect said at least one user to said LISTO server;
- a LISTO instructor located in said transport network to instruct said LISTO server concerning said requested live media content; and
- a plurality of external interfaces to let interact said LISTO server with said distribution network mediator and/or with said LISTO instructor and/or with said content delivery network end point and/or with said at least one user.

In an embodiment, the distribution network mediator and the LISTO instructor can be integrated in existing elements of said content delivery network.

In another embodiment, the LISTO instructor can be integrated in an ALTO server.

In yet another embodiment, the distribution network mediator can be integrated in said controller.

Preferably, the plurality of external interfaces comprises:
- an interface to define at least the interaction between said LISTO instructor and said controller;
- an interface to define at least the interaction between said LISTO server and said LISTO instructor;
- an interface to define at least the interaction between said LISTO server and said content delivery network end point; and
- an interface to define at least the interaction between said LISTO server and said at least one user.

In yet another embodiment, the controller can be a CDN controller in case of a HTTP redirect mechanism or an authoritative domain name system (DNS) server in case of a DNS name resolution mechanism.

A second aspect of the present invention, relates to a method for live content distribution optimization over a content delivery network, comprising as commonly in the field:
requesting, at least one user provided with a computing device, a live media content; and
receiving, by a controller, said requesting and transmitting said requested live media content to said at least one user;

On contrary to the known proposals, in the method of the second aspect of the present invention a live streaming optimizer (LISTO) server located in the transport network of said content delivery network comprises requesting said requested live media content to an identified content delivery network end point and transmitting said live media content to said at least one user.

Preferably, the controller sends in parallel at the same time to said at least one user an HTTP redirect command to receive the requested live media content from said LISTO server.

For instance, the live media content requested can be a requesting/demanding of the live TV channels from a TV service demand said at least one user is willing to watch and/or receive.

In an embodiment, an ALTO server is used in case said content delivery network is operated by a third party.

The controller also incorporates according to another embodiment at least information regarding an identification of said LISTO server and a corresponding optimal mapping respect to said at least one user.

In the content delivery network it will be only one copy of said requested live media content between said content delivery network end point and said LISTO server, which will be replicated and sent to the requesting users as many times as needed, so said at least one user will be provided with at least one copy of said live media content.

The LISTO instructor can have access to information regarding the topology of said content delivery network. The LISTO instructor can access to this topology information by its own or by means of interacting to other elements in the network, e.g. ALTO server. That topological information, previously facilitated by the controller, will allow identify said LISTO server which is best suited per demanding customer.

Finally, the distribution network mediator can provide information regarding said requested live media content to said LISTO server and can further inform said LISTO instructor about said identified content delivery network end point, in such a way said Instructor is able to send back that information to said LISTO server

A third aspect of the present invention relates to a live streaming optimizer (LISTO) server for optimal distribution of live media content, said LISTO server being located in the transport network of a content delivery network and being adapted to request live media content to an identified content delivery network end point in a certain domain and to deliver said live media content to at least one user provided with a computing device.

The internal structure of the LISTO server is modular and comprises:
- a plurality of internal modules in charge of performing an optimal distribution of said live media content;
- a plurality of internal interfaces to let the interaction of said plurality of internal modules; and
- a plurality of external interfaces to let interact said LISTO server with a distribution network mediator and/or with a LISTO instructor and/or with said content delivery network end point and/or with said at least one user.

In an embodiment, the LISTO server can be an individual element of the transport network of said content delivery network or on contrary can be implemented in an existing element, i.e. a DSLAM, of the transport network of said content delivery network.

Finally, the LISTO server preferably will be located a close distance near said at least one user, hence helping on the internal distribution within the content delivery network.

### Brief Description of the Drawings

The previous and other advantages and features will be more fully understood from the following detailed description of embodiments, with reference to the attached, which must be considered in an illustrative and non-limiting manner, in which:
Figure 1 is a flow diagram showing the problem of the unicast nature of HTTP requests imposing some degree of inefficiency to the TV distribution in terms of consumed bandwidth.
Figure 2 is an illustration of the LISTO server with the two elements of the distribution network and the transport network.
Figure 3 is a flow diagram showing the case when the CDN is operated by a third party. In this case, it is needed some interaction through the use of an ALTO server between the CDN operator and the telecom operator to implement this proposed optimization.
Figure 4 is a flow diagram showing the case when the CDN is part of the telecom operator network.
Figure 5 is an illustration of the interfaces for an external CDN forming part of the proposed architecture. The striped boxes represent existing or state-of-the-art elements not subject of this invention.
Figure 6 is an illustration of the interfaces for a CDN managed by the telecom operator forming part of the proposed architecture. The striped boxes represent existing or state-of-the-art elements not subject of this invention.
Figure 7 is an illustration of the internal modular structure of the LISTO server.

### Detailed Description of Several Embodiments

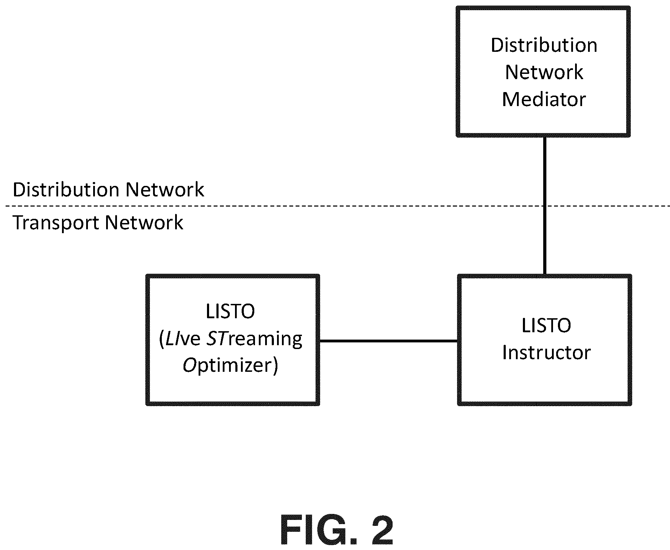

The LISTO server will be complemented with other two elements interacting with it. One of these elements is part of the distribution network, while the other one is part of the transport network. Those elements will talk each other to determine the best LISTO server suited to request the content on behalf of the users behind it. The element in the distribution network will interact with the conventional CDN controllers to redirect the end user to the LISTO server to get the content. The element in the transport network will interact with the LISTO server to instruct it about the content to be requested. Figure 2 presents a schematic view of these components:
Both the LISTO Instructor and the Distribution Network Mediator will be typically integrated in existing network elements (e.g., the LISTO Instructor in an ALTO Server, the Distribution Network Mediator in a CDN Controller and/or an authoritative DNS Server for the domain corresponding to the desired Live OTT content).

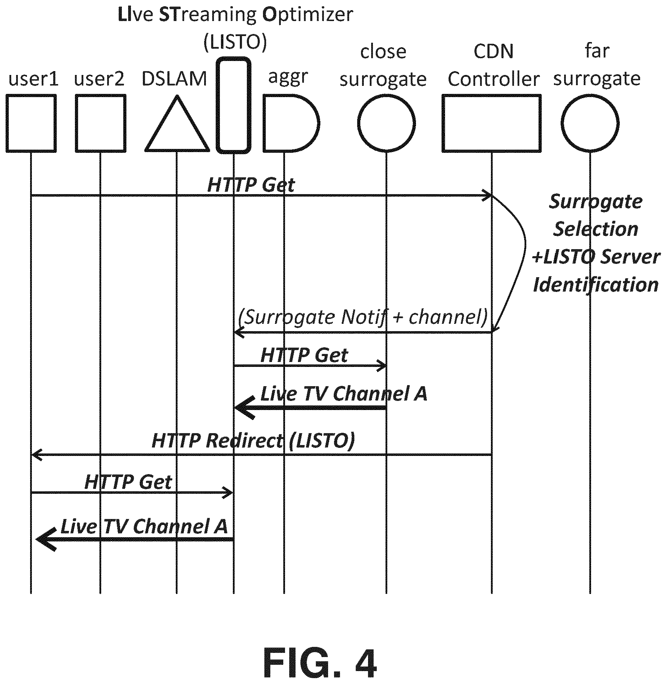

Figure 4 shows an embodiment of the basic procedure for optimizing the delivery of unicast TV flows in the network. This procedure is as follows:
1. The end user requests a live TV channel by using an HTTP Get message
2. The HTTP Get message is received by a CDN controller. This controller will identify a CDN End Point to deliver the requested channel.
3. The LISTO server is informed of both the live TV channel requested by the user, and the CDN End Point ready to serve that channel (as selected by the CDN controller), in such a way that the LISTO server can request the channel to the CDN End Point on behalf the end user.
4. In parallel, the CDN controller sends to the end user an HTTP redirect command in order to redirect the HTTP request towards the LISTO server, from where the end user will get the desired live TV channel through a unicast session.

In the DNS-based case, the end host will query its configured DNS server about the IP address resolution for a certain domain of the live OTT content distributor (e.g., liveott.cdn.com), specific to the desired content. Independently if the DNS queries are either iterative or recursive, the authoritative DNS for the requested domain (liveott.cdn.com) will provide the host routing request pointing to the LISTO server, previously identified by the LISTO Instructor taking into account the IP address of the host (for recursive DNS queries) or the IP address of an intermediate DNS server close to the end user (for iterative DNS queries).

As a result, in the network there will be only one copy of the requested TV channel between CDN End Point and LISTO server, which in turn will replicate it as much as needed to reach the end users. The LISTO server can be conceived as a standalone element rolled-out in the network, or as functionality implemented in some existing node element, e.g. the DSLAM.

Depending on where the LISTO server is deployed, different saving in terms of bandwidth can be achieved.

Architecture: For the HTTP redirection case, as described above, the CDN controller will get knowledge of the channel being requested by a user through the HTTP Get message.

Since the CDN accessed by the end user can be managed or not by the telecom operator providing the user connectivity, two cases can be differentiated:
- CDN totally managed by the telecom operator: in this case the user request (i.e., the HTTP Get message) is analysed by an element which is part of the telecom operator network, then the operator has direct knowledge of the TV channel demand from the very beginning. No intermediate elements are needed to trigger the optimization process.
- CDN managed by a third party: in this case the user request (i.e., the HTTP Get message) is received by an element external to the telecom operator network. In order to capture the end user request, it is needed some interaction with the CDN controller. To do that, the present invention will assume that an ALTO server [2] is in place in the telecom operator network, to collaborative work with the CDN, which will implement an ALTO Client, for a better service delivery. Then, some extensions to the ALTO functionality will be proposed as part of this invention.

The DNS-based case is similar, but DNS Servers are those which play the role of the CDN controller described above.

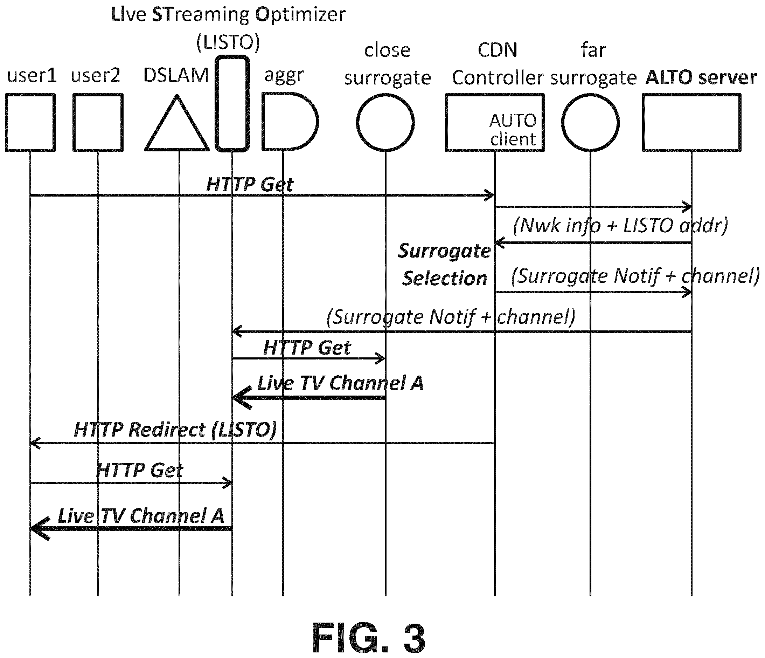

Architecture for an external CDN: Figure 3 shows the case the CDN is operated by a third party, it is needed some interaction between the CDN operator and the telecom operator to implement this proposed optimization. Such interaction is envisaged through the use of an ALTO server [2], and some use cases of that interaction are being proposed on the IETF [4], [5], [8].

Basically, the aim of the ALTO server is to provide network knowledge to applications that need to select one from a sort of alternative endpoints to attend a service request. Through this interaction, the telecom operator can provide information about its preferences in order to optimize the use of network resources while providing the same level of the application performance (or even improving that performance by helping to select better positioned resources from the CDN point of view).

Architecture for a CDN managed by the telecom operator: Figure 4 shows the case the CDN is part of the telecom operator network, the CDN controller can incorporate some of the functionalities needed to control the process. This information can be, for instance, the identifiers for the LISTO servers and the corresponding optimal mapping respect to the end user base.

### Live Streaming Optimizer description:

### External interfaces:

The LISTO server offers a number of interfaces to the other components in the network in order to perform an optimal distribution of the Live OTT streaming. There exist some variations depending on the CDN type, managed or unmanaged, as described in the following sections.

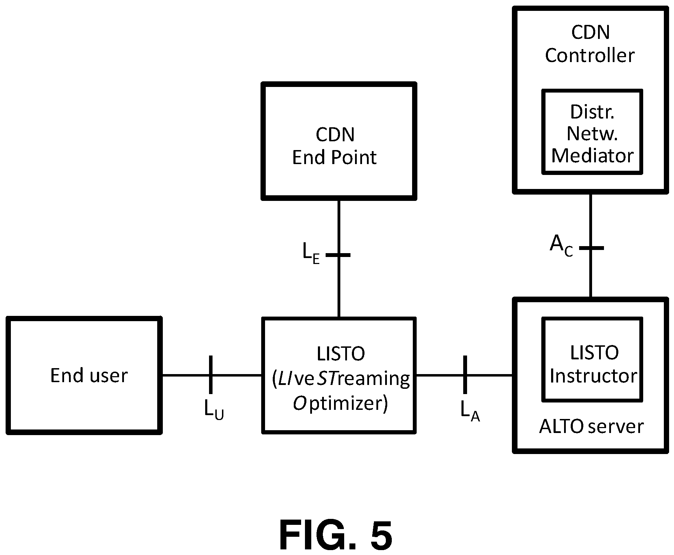

Architecture for an external CDN: The interfaces in Figure 5 are parts of the proposed architecture (striped boxes represent existing or state-of-the-art elements not subject of this invention):
- A_{C} interface (ALTO server to CDN controller interface): this interface defines the interaction between the ALTO server and the CDN controller. Through this interface, the following information is exchanged:
   o The ALTO server informs the CDN controller about the LISTO server best suited to serve the content to the requesting End User. This information helps the CDN Controller to determine the best CDN End Point to provide the TV channel to be requested by the LISTO server.
   o The CDN controller informs the ALTO server about the selected CDN End Point, as well as the TV channel being requested by the End User. This information helps the ALTO server to instruct the LISTO server to request the demanded TV channel, and to obtain it from the best suited CDN End Point.
- L_{A} interface (LISTO to ALTO server interface): this interface defines the interaction between the ALTO server and the CDN controller. Through this interface the ALTO server informs the LISTO server about the TV channel to be requested as well as the CDN End Point to serve such request.
- L_{E} interface (LISTO to CDN End Point interface): this interface defines the interaction between the LISTO server and the CDN End Point. Through this interface, the LISTO server requests a TV channel as if it was an End User, from the CDN End Point perspective.
- L_{U} interface (LISTO to End User interface): this interface defines the interaction between the End User and the LISTO server. Through this interface, the End User requests a TV channel to the LISTO server as if it was a CDN End Point, from the End User perspective.

Apart from that, another external interface not shown in the figure 5, named L_{R} (LISTO to OSS system interface) is considered for reporting and administrative purposes (accounting, monitoring, etc.) with external subsystems to facilitate the LISTO server operation.

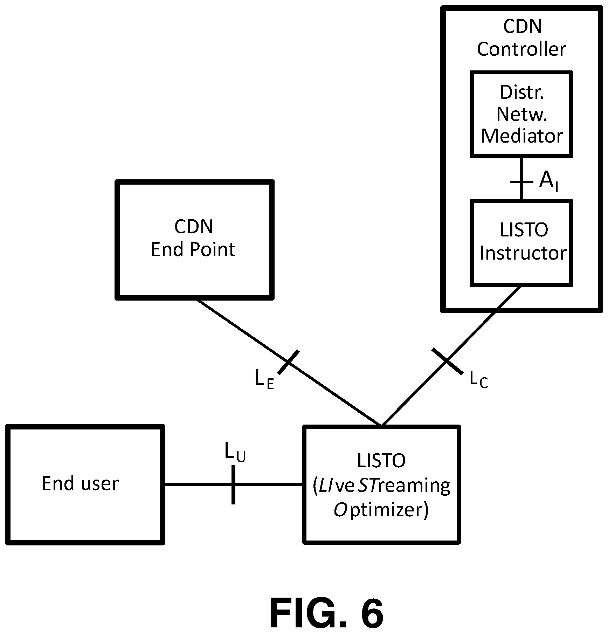

Architecture for a CDN managed by the telecom operator: The interfaces in Figure 6 are parts of the proposed architecture (striped boxes represent existing or state-of-the-art elements not subject of this invention):
- L_{C} interface (LISTO to CDN controller interface): this interface defines the interaction between the LISTO server and the CDN controller. Through this interface, the CDN controller provides the LISTO server with the information needed to request the TV channel demanded by any End User, and some additional information such as the CDN End Point able to provide that TV channel. The information conveyed through this interface is further processed by the LISTO Instructor module residing in the CDN Controller.
- A_{I} interface (LISTO instructor module to Distribution Network Mediator module interface, residing both in a CDN controller): this interface defines the internal communication of both modules. The LISTO Instructor will help the CDN controller to find and instruct the best suited LISTO server to serve the content to the requesting End User, from the most adequate CDN End Point.
- L_{E} interface (LISTO to CDN End Point interface): this interface defines the interaction between the LISTO server and the CDN End Point. Through this interface, the LISTO server requests a TV channel as if it was an End User, from the CDN End Point perspective.
- L_{U} interface (LISTO to End User interface): this interface defines the interaction between the End User and the LISTO server. Through this interface, the End User requests a TV channel to the LISTO server as if it was a CDN End Point, from the End User perspective.

Apart from that, another external interface not shown in the figure 6, named L_{R} (LISTO to OSS system interface) is considered for reporting and administrative purposes (accounting, monitoring, etc.) with external subsystems to facilitate the LISTO server operation.

### Internal structure and interfaces of the Live Streamer Optimizer:

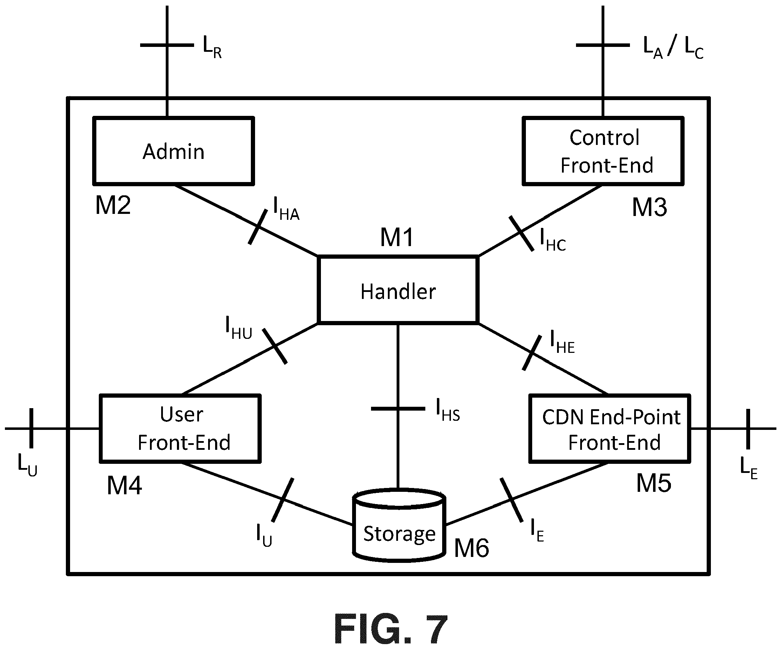

The internal structure of the LISTO server is modular, and as such it presents a number of interfaces between the modules as depicted in Figure 7. The modules being part of the LISTO server are:
- Admin (M2): the Admin module is in charge of accounting, monitoring and reporting on content usage.
- Handler (M1): the Handler module is in charge of maintaining the connection status with each end-user requesting certain content.
- Storage (M6): the Storage module is in charge of the storage of the received segments in order to prevent segment loss towards the End-User
- Control Front-End (M3): the Control Front-End module is in charge of communicating with the external control entities of the system, either the CDN Controller, in the case of CDN managed by the telecom operator or the ALTO server, in case of CDN unmanaged scenario.
- User Front-End (M4): The User Front-End is the module that receives the redirected end-user requests to serve a certain live streaming content.
- CDN End-Point Front-End (M5): The CDN End-Point Front-End is the module that requests a live streaming content on behalf of one or more end users.

The internal interfaces of the LISTO server are the following ones:
- I_{HA} interface: this interface defines the interaction between the Handler and the Admin internal modules. Through this interface, the handler sends logs and events (i.e SNMP traps, syslog...) to the Admin module for it to progress to the OSS systems. In turn, by this interface the OSS management get the handler (therefore to the entire server) by the Admin module.
- I_{HC} interface: this interface defines the interaction between the Handler and the Controller Front-End internal modules. Through this interface, the Handler sends the user's channels request, received through the I_{HU}, to the CDN control front end with the aim of this module the progress and obtain the necessary information (i.e info about CDN end point server).
- I_{HU} interface: this interface defines the interaction between the Handler and the User Front-End internal modules. Through this interface, the User Front-End sends the channel request required by the user to the handler in order to handler process it and do the necessary, like the request a new channel or request information to do that.
- I_{HE} interface: this interface defines the interaction between the Handler and the CDN End-Point Front-End internal modules. Through this interface, the handler controls the communication between the CDN server End Point and LISTO server (via CDN End Point Front End).
- I_{HS} interface: this interface defines the interaction between the Handler and the Storage internal modules. Through this interface, the handler communicates with the module storage to control the correct sequence of sending information segments to the user.
- I_{U} interface: this interface defines the interaction between the User Front-End and the Storage internal modules. Through this interface, the storage module sends the channel information (which previously has been in buffer) to the user front end module. The internal forwarding must have sufficient capacity for optimal delivery
- I_{E} interface: this interface defines the interaction between the CDN End-Point Front-End and the Storage internal modules. Through this interface, the CDN End point front end sends the information correctly sequenced the different channels to storage (buffer) so that it will store.

The LISTO Instructor module will have access to network topological information by its own or by means of interacting to other elements in the network (e.g., ALTO server). That topological information will allow identify the LISTO server best suited per demanding customer, e.g., based on the IP address of the End-User or whatever other means. This information will be later used by the CDN controller to redirect the End-User request to the LISTO server.

The Distribution Network Mediation module will provide information about the TV content being requested by the End-User, and will inform the LISTO Instructor about the selected CDN End-Point in such a way the Instructor is able to send back that information to the LISTO server.

A number of additional advantages to those already reported have been identified.
- With this invention, between the LISTO server and the CDN End Point, only the TV channels actually demanded are distributed towards the access nodes, thus significantly saving bandwidth when there is a high concentration on the number of different channels requested by the end users. This is especially true in the case the LISTO server is co-located to, or is part of, the access node directly providing connectivity to the end user (e.g., the DSLAM).
- The real time nature of the Live OTT imposes to the network important requirements on latency and jitter. The introduction of a LISTO server also shortens the TCP path among the end user and the CDN End Point, impacting positively in the quality perceived by the end user, as the connection traverses less hops, presenting lower round-trip-time, which is generically beneficial for TCP communications. Additionally, the effect of diminishing the number of TCP flows in the network is also beneficial for the general quality of service as TCP shares the existing bandwidth among all the existing flows, so more bandwidth is available for any existing TCP flow when less flows coexist in the network.
- This invention allows the distribution of Live TV channels in a hierarchical model, concatenating LISTO servers along the network in order to minimize the number of streams from the Live TV OTT headers towards the End Users.

The foregoing describes embodiments of the present invention and modifications, obvious to those skilled in the art can be made thereto, without departing from the scope of the present invention as described by the present claims.

### REFERENCES

[1] A.C. Begen, T. Angul, M. Baugher, "Watching video over the web. Part I: streaming protocols", IEEE Internet Computing, vol. 15/2, pp. 54-63, Mar./Apr. 2011.
[2] R. Alimi, R. Penno, Y. Yang, "ALTO protocol", draft-ietf-alto-protocol-11 (work in progress), March 2012.
[3] S. Islam, "A HTTP Streaming Video Server with Dynamic Advertisement Splicing", M.Sc.Thesis, Royal Institute of Technology (KTH), Sweden, 2010.
[4] R. Penno, J. Medved, R. Alimi, R. Yang, S. Previdi, "ALTO and Content Delivery Networks", draft-penno-alto-cdn-03 (work in progress), March 2011.
[5] B. Niven-Jenkins, G. Watson, N. Bitar, , J. Medved, S. Previdi, "Use Cases for ALTO within CDNs", draft-jenkins-alto-cdn-use-cases-02 (work in progress), December 2011.
[6] H. Fahmi, et al. "Proxy servers for scalable interactive video", IEEEComputer, September 2001.
[7] A. Barbir, B. Cain, R. Nair, O. Spatscheck, "Known Content Network (CN) Request-Routing Mechanisms", RFC3568, July 2003.
[8] E. Marocco, V. Gurbani, "Extending the Application-Layer Traffic Optimization (ALTO) Protocol", draft-marocco-alto-next-00 (work in progress), January 2012.
[9] W.-K. Liao, P.-H. Shih, "Architecture of Proxy Partial Caching Using HTTP for Supporting Interactive Video and Cache Consistency", xxx

## Claims

1. A system for live content distribution optimization from a content delivery network, comprising:
- at least one user provided with a computing device requesting a live media content to a controller located in a distribution network of a content delivery network; and
- said controller being adapted to receive said requesting and to identify a content delivery network end point to transmit said requested live media content via a proxy server, the system being **characterized in that** it further comprises:
- a live streaming optimizer (LISTO) instructor located in a transport network connected to said distribution network, said LISTO instructor having access to information regarding the topology of said content delivery network and being adapted to identify a LISTO server located in said transport network in order the LISTO server transmit the requested live media content to said at least one user in acting as proxy server;
- a distribution network mediator located in said distribution network, said distribution network mediator being adapted to interact with said controller and the LISTO instructor to redirect the at least one user to said identified LISTO server, to provide information regarding said requested live media content to said LISTO server and to inform said LISTO instructor about said identified content delivery network end point, in such a way the LISTO instructor is able to send back the received information to the LISTO server;
- said LISTO server, previously identified, being adapted to act as a proxy for live streaming requests by means of:
- request said live media content to said identified content delivery network end point in a certain domain; and
- upon having received the requested live media content from the identified content delivery network end point, further transmit the live media content to said at least one user; and
- a plurality of external interfaces to let interact said LISTO server with said distribution network mediator and/or with said LISTO instructor and/or with said content delivery network end point and/or with said at least one user.

2. A system according to claim 1, **characterized in that** said distribution network mediator is integrated in existing elements of said content delivery network.

3. A system according to claim 2, **characterized in that** said LISTO instructor is integrated in an ALTO server.

4. A system according to claim 2, **characterized in that** said distribution network mediator is integrated in said controller.

5. A system according to claim 1, **characterized in that** said plurality of external interfaces comprises:
- an interface to define at least the interaction between said LISTO instructor and said controller;
- an interface to define at least the interaction between said LISTO server and said LISTO instructor;
- an interface to define at least the interaction between said LISTO server and said content delivery network end point; and
- an interface to define at least the interaction between said LISTO server and said at least one user.

6. A system according to claim 1, **characterized in that** said controller is any of a CDN controller or an authoritative domain name system (DNS) server.

7. A method for live content distribution optimization from a content delivery network, comprising:
requesting, by at least one user provided with a computing device, to a controller located in a distribution network of a content delivery network, a live media content; and
receiving, by said controller, said requesting and identifying a content delivery network end point intended to transmitting said requested live media content via a proxy server; the method being **characterized in that** it comprises:
- identifying, by a live streaming optimizer (LISTO) instructor located in a transport network connected to said distribution network, a LISTO server located in said transport network in order the LISTO server transmit the requested live media content to said at least one user in acting as proxy server, the LISTO instructor having access to information regarding the topology of the content delivery network;
- establishing an interaction between a distribution network mediator located in said distribution network and said controller to redirect the at least one user to said identified LISTO server;
- upon said interaction being established, providing, by said distribution network mediator, information regarding said requested live media content to said LISTO server and further informing said LISTO instructor about said identified content delivery network end point;
- sending, by the LISTO instructor, the received information about said identified content delivery network end point to the LISTO server;
- requesting, by the LISTO server acting as a proxy, said live media content to said identified content delivery network end point in a certain domain; and
- further transmitting, by said LISTO server, upon having received the requested live media content from the identified content delivery network end point, said live media content to said at least one user.

8. A method according to claim 7, **characterized in that** said controller sends to said at least one user an HTTP redirect command to receive the requested live media content from said LISTO server.

9. A method according to claim 8, **characterized in that** said controller sends said HTTP redirect command in parallel to said at least one user at the same time as said LISTO server requests said live media content to said identified content delivery network end point.

10. A method according to claim 7, **characterized in that** it comprises using an ALTO server in case said content delivery network is operated by a third party.

11. A method according to claim 10, **characterized in that** said controller obtains information regarding an identification of said LISTO server and a corresponding optimal mapping respect to said at least one user.

12. A method according to claim 7, **characterized in that** it comprises having only one of said requested live media content between said content delivery network end point and said LISTO server.

13. A method according to claim 12, **characterized in that** said requested live media content is sent to the requesting user as many times as needed.

14. A live streaming optimizer (LISTO) server for optimal distribution of live media content, said LISTO server being configured to act as a proxy for live streaming requests and being located in a transport network connecting at least one user provided with a computing device to a content delivery network, the LISTO server being adapted to request live media content to an identified content delivery network end point in a certain domain of the content delivery network and to further deliver said requested live media content to said least one user,
wherein the LISTO server being identified by a LISTO instructor located in the transport network having access to information regarding the topology of the content delivery network via a content distribution mediator wherein the LISTO server receiving information regarding the requested live media content from a distribution network mediator located in said distribution network and receiving information about said identified content delivery network end point from the LISTO instructor, the latter having received said information from the distribution network mediator, and
wherein the LISTO server comprising a plurality of external interfaces (LU, IA/C,LR, LE) to interact with said distribution network mediator and/or with said LISTO instructor and/or with said content delivery network end point and/or with said at least one user.

15. A LISTO server according to claim 14, **characterized in that** it further comprises:
a plurality of internal modules (M1..M6) in charge of performing an optimal distribution of said live media content; and
a plurality of internal interfaces (I_{HA}, I_{HC}, I_{HU}, I_{HE}, H_{IS}, I_{U}, I_{E}) to let the interaction of said plurality of internal modules (M1..M6).

16. A LISTO server according to claim 15, **characterized in that** said LISTO server is an individual element of the transport network of said content delivery network.

17. A LISTO server according to claim 15, **characterized in that** said LISTO server is implemented in an existing element of the transport network of said content delivery network.

18. A LISTO server according to claims 16 or 17, **characterized in that** said LISTO server is located a close distance near said at least one user.

## Patentansprüche

1. System zur Optimierung der Verteilung von Live-Inhalt aus einem Inhaltsbereitstellungsnetzwerk, Folgendes umfassend:
- mindestens einen Benutzer, welchem eine Rechenvorrichtung bereitgestellt ist, der von einer Steuerung, die in einem Verteilungsnetzwerk eines Inhaltsbereitstellungsnetzwerks angeordnet ist, Live-Medieninhalte anfragt; und
- wobei die Steuerung angepasst ist, um die Anfrage zu empfangen und einen Endpunkt eines Inhaltsbereitstellungsnetzwerks zum Übertragen des angefragten Live-Medieninhalts über einen Proxy-Server zu identifizieren,
wobei das System **dadurch gekennzeichnet ist, dass** es ferner Folgendes umfasst:
- einen Live-Streaming Optimierer (LISTO)-Instrukteur, welcher in einem Transportnetzwerk, das mit dem Verteilungsnetzwerk verbunden ist, angeordnet ist, wobei der LISTO-Instrukteur Zugang zu Informationen in Bezug auf die Topologie des Inhaltsbereitstellungsnetzwerks hat und angepasst ist, um einen LISTO-Server, welcher in dem Transportnetzwerk angeordnet ist, zu identifizieren, damit der LISTO-Server dem mindestens einen Benutzer den angefragten Live-Medieninhalt überträgt, indem er als Proxy-Server fungiert;
- einen Verteilungsnetzwerkvermittler, welcher in dem Verteilungsnetzwerk angeordnet ist, wobei der Verteilungsnetzwerkvermittler angepasst ist, um mit der Steuerung und dem LISTO-Instrukteur zum Weiterleiten des mindestens einen Benutzers zu dem identifizierten LISTO-Server, zum Bereitstellen von Informationen in Bezug auf den angefragten Live-Medieninhalt zu dem LISTO-Server und zum Informieren des LISTO-Instrukteurs über den identifizierten Endpunkt des Inhaltsbereitstellungsnetzwerks zusammenzuwirken, sodass der LISTO-Instrukteur dem LISTO-Server die empfangenen Informationen zurücksenden kann;
- wobei der zuvor identifizierte LISTO-Server angepasst ist, um als Proxy für Live-Streaming-Anfragen durch Folgendes zu fungieren;
- Anfragen des Live-Medieninhalts bei dem identifizierten Endpunkt des Inhaltsbereitstellungsnetzwerks in einer bestimmten Domäne; und
- weiteres Übertragen des Live-Medieninhalts an den mindestens einen Benutzer nach dem Empfang des angefragten Live-Medieninhalts von dem identifizierten Endpunkt des Inhaltsbereitstellungsnetzwerks; und
- Veranlassen des Zusammenwirkens des LISTO-Servers mit dem Verteilungsnetzwerkvermittler und/oder mit dem LISTO-Instrukteur und/oder mit dem Endpunkt des Inhaltsbereitstellungsnetzwerks und/oder mit dem mindestens einen Benutzer über mehrere äußere Schnittstellen.

2. System nach Anspruch 1, **dadurch gekennzeichnet, dass** der Verteilungsnetzwerkvermittler in vorhandenen Elementen des Inhaltsbereitstellungsnetzwerks eingeordnet ist.

3. System nach Anspruch 2, **dadurch gekennzeichnet, dass** der LISTO-Instrukteur in einem ALTO-Server eingeordnet ist.

4. System nach Anspruch 2, **dadurch gekennzeichnet, dass** der Verteilungsnetzwerkvermittler in der Steuerung eingeordnet ist.

5. System nach Anspruch 1, **dadurch gekennzeichnet, dass** die mehreren äußeren Schnittstellen Folgendes umfassen:
- eine Schnittstelle zum Definieren von mindestens dem Zusammenwirken zwischen dem LISTO-Instrukteur und der Steuerung;
- eine Schnittstelle zum Definieren von mindestens dem Zusammenwirken zwischen dem LISTO-Server und dem LISTO-Instrukteur;
- eine Schnittstelle zum Definieren von mindestens dem Zusammenwirken zwischen dem LISTO-Server und dem Endpunkt des Inhaltsbereitstellungsnetzwerks; und
- eine Schnittstelle zum Definieren von mindestens dem Zusammenwirken zwischen dem LISTO-Server und dem mindestens einen Benutzer.

6. System nach Anspruch 1, **dadurch gekennzeichnet, dass** die Steuerung eines von einer Steuerung eines CDN oder einem autoritativen Domain Name System (DNS)-Server ist.

7. Verfahren zur Optimierung der Verteilung von Live-Inhalt aus einem Inhaltsbereitstellungsnetzwerk, Folgendes umfassend:
Anfragen eines Live-Medieninhalts durch mindestens einen Benutzer, welchem eine Rechenvorrichtung bereitgestellt ist, bei einer Steuerung, die in einem Verteilungsnetzwerk eines Inhaltsbereitstellungsnetzwerks angeordnet ist; und
Empfangen der Anfrage durch die Steuerung und Identifizieren eines Endpunkts eines Inhaltsbereitstellungsnetzwerks, welcher vorgesehen ist, um den angefragten Live-Medieninhalt über einen Proxy-Server zu übertragen;
wobei das Verfahren **dadurch gekennzeichnet ist, dass** es Folgendes umfasst:
- Identifizieren eines LISTO-Servers, welcher in dem Transportnetzwerk angeordnet ist, durch einen Live-Streaming Optimierer (LISTO)-Instrukteur, welcher in einem Transportnetzwerk, das mit dem Verteilungsnetzwerk verbunden ist, angeordnet ist, damit der LISTO-Server den angefragten Live-Medieninhalt an den mindestens einen Benutzer überträgt, indem er als Proxy-Server fungiert, wobei der LISTO-Instrukteur Zugang zu Informationen in Bezug auf die Topologie des Inhaltsbereitstellungsnetzwerks hat;
- Herstellen eines Zusammenwirkens zwischen einem Verteilungsnetzwerkvermittler, welcher in dem Verteilungsnetzwerk angeordnet ist, und der Steuerung, um den mindestens einen Benutzer zu dem identifizierten LISTO-Server weiterzuleiten;
- Bereitstellen von Informationen in Bezug auf den angefragten Live-Medieninhalt an den LISTO-Server durch den Verteilungsnetzwerkvermittler und weiteres Informieren des LISTO-Instrukteurs über den identifizierten Endpunkt des Inhaltsbereitstellungsnetzwerks nach dem Herstellen des Zusammenwirkens;
- Senden der empfangenen Informationen über den identifizierten Endpunkt des Inhaltsbereitstellungsnetzwerks an den LISTO-Server durch den LISTO-Instrukteur;
- Anfragen des Live-Medieninhalts bei dem identifizierten Endpunkt des Inhaltsbereitstellungsnetzwerks durch den LISTO-Server in einer bestimmten Domäne, indem er als Proxy fungiert; und
- weiteres Übertragen des Live-Medieninhalts an den mindestens einen Benutzer durch den LISTO-Server nach dem Empfang des angefragten Live-Medieninhalts von dem identifizierten Endpunkt des Inhaltsbereitstellungsnetzwerks.

8. Verfahren nach Anspruch 7, **dadurch gekennzeichnet, dass** die Steuerung dem mindestens einen Benutzer einen HTTP-Weiterleitungsbefehl sendet, um den angefragten Live-Medieninhalt von dem LISTO-Server zu empfangen.

9. Verfahren nach Anspruch 8, **dadurch gekennzeichnet, dass** die Steuerung den HTTP-Weiterleitungsbefehl parallel an den mindestens einen Benutzer zu der gleichen Zeit sendet, zu welcher der LISTO-Server dem identifizierten Endpunkt des Inhaltsbereitstellungsnetzwerk den Live-Medieninhalt anfragt.

10. Verfahren nach Anspruch 7, **dadurch gekennzeichnet, dass** es das Verwenden von einem ALTO-Server in dem Fall, dass das Inhaltsbereitstellungsnetzwerk von einem Dritten betrieben ist, umfasst.

11. Verfahren nach Anspruch 10, **dadurch gekennzeichnet, dass** die Steuerung Informationen in Bezug auf eine Identifizierung des LISTO-Servers und ein entsprechendes optimales Mapping in Bezug auf den mindestens einen Benutzer erhält.

12. Verfahren nach Anspruch 7, **dadurch gekennzeichnet, dass** es das Aufweisen von nur einem der angefragten Live-Medieninhalte zwischen dem Endpunkt des Inhaltsbereitstellungsnetzwerks und dem LISTO-Server umfasst.

13. Verfahren nach Anspruch 12, **dadurch gekennzeichnet, dass** der angefragte Live-Medieninhalt an den anfragenden Benutzer so oft wie nötig gesendet wird.

14. Live-Streaming Optimierer (LISTO)-Server zur optimalen Verteilung von Live-Medieninhalt, wobei der LISTO-Server gestaltet ist, um als Proxy für Live-Streaming Anfragen zu fungieren, und in einem Transportnetzwerk angeordnet ist, welches mindestens einen Benutzer, dem eine Rechenvorrichtung bereitgestellt ist, mit einem Inhaltsbereitstellungsnetzwerk verbindet, wobei der LISTO-Server angepasst ist, um von einem identifizierten Endpunkt eines Inhaltsbereitstellungsnetzwerks Live-Medieninhalt in einer bestimmten Domäne des Inhaltsbereitstellungsnetzwerks anzufragen und weiter den angefragten Live-Medieninhalt an den mindestens einen Benutzer zu liefern,
wobei der LISTO-Server von einem LISTO-Instrukteur identifiziert wird, welcher in dem Transportnetzwerk angeordnet ist, wobei er Zugang zu den Informationen in Bezug auf die Topologie des Inhaltsbereitstellungsnetzwerks über einen Inhaltsverteilungsvermittler hat
wobei der LISTO-Server Informationen in Bezug auf den angefragten Live-Medieninhalt von einem Verteilungsnetzwerkvermittler, welcher in dem Verteilungsnetzwerk angeordnet ist, empfängt und Informationen über den identifizierten Endpunkt des Inhaltsbereitstellungsnetzwerks von dem LISTO-Instrukteur empfängt, wobei letzterer die Informationen von dem Verteilungsnetzwerkvermittler empfangen hat, und
wobei der LISTO-Server mehrere äußere Schnittstellen (LU, IA/C, LR, LE) zum Zusammenwirken mit dem Verteilungsnetzwerkvermittler und/oder mit dem LISTO-Instrukteur und/oder mit dem Endpunkt des Inhaltsbereitstellungsnetzwerks und/oder mit dem mindestens einen Benutzer umfasst.

15. LISTO-Server nach Anspruch 14, **dadurch gekennzeichnet, dass** er ferner Folgendes umfasst:
mehrere innere Module (M1..M6), welche dafür zuständig sind, eine optimale Verteilung des Live-Medieninhalts durchzuführen; und
mehrere innere Schnittstellen (I_{HA}, I_{HC}, I_{HU}, I_{HE}, H_{IS}, I_{U}, I_{E}) zum Veranlassen des Zusammenwirkens der mehreren inneren Module (M1..M6).

16. LISTO-Server nach Anspruch 15, **dadurch gekennzeichnet, dass** der LISTO-Server ein einzelnes Element des Transportnetzwerks des Inhaltsbereitstellungsnetzwerks ist.

17. LISTO-Server nach Anspruch 15, **dadurch gekennzeichnet, dass** der LISTO-Server in einem vorhandenen Element des Transportnetzwerks des Inhaltsbereitstellungsnetzwerks implementiert ist.

18. LISTO-Server nach Anspruch 16 oder 17, **dadurch gekennzeichnet, dass** der LISTO-Server in einem engen Abstand nah an dem mindestens einen Benutzer angeordnet ist.

## Revendications

1. Système pour l'optimisation de distribution de contenu en direct à partir d'un réseau de diffusion de contenu, comprenant :
- au moins un utilisateur doté d'un dispositif informatique demandant un contenu multimédia en direct à un contrôleur situé dans un réseau de distribution d'un réseau de diffusion de contenu ; et
- ledit contrôleur étant apte à recevoir ladite demande et à identifier un point terminal de réseau de diffusion de contenu pour transmettre ledit contenu multimédia en direct demandé via un serveur proxy,
le système étant **caractérisé en ce qu'**il comprend en outre :
- un instructeur d'optimiseur de diffusion en continu en direct (LISTO) situé dans un réseau de transport connecté audit réseau de distribution, ledit instructeur LISTO ayant accès à des informations relatives à la topologie dudit réseau de diffusion de contenu et étant adapté pour identifier un serveur LISTO situé dans ledit réseau de transport afin que le serveur LISTO transmette le contenu multimédia en direct demandé audit au moins un utilisateur en agissant comme un serveur proxy ;
- un médiateur de réseau de distribution situé dans ledit réseau de distribution, ledit médiateur de réseau de distribution étant adapté pour interagir avec ledit contrôleur et l'instructeur LISTO pour rediriger le au moins un utilisateur audit serveur LISTO identifié, pour fournir des informations relatives audit contenu multimédia en direct demandé audit serveur LISTO et pour informer ledit instructeur LISTO sur ledit point terminal du réseau de diffusion de contenu identifié, de sorte que l'instructeur LISTO est capable de renvoyer les informations reçues au serveur LISTO ;
- ledit serveur LISTO, préalablement identifié, étant adapté pour agir comme un proxy pour les demandes de diffusion en continu en direct au moyen de :
- demander ledit contenu multimédia en direct audit point terminal de réseau de diffusion de contenu identifié dans un certain domaine ; et
- après avoir reçu le contenu multimédia en direct demandé à partir du point terminal de réseau de diffusion de contenu identifié, transmettre en outre le contenu multimédia en direct audit au moins un utilisateur ; et
- une pluralité d'interfaces externes pour laisser interagir ledit serveur LISTO avec ledit médiateur de réseau de distribution et/ou avec ledit instructeur LISTO et/ou avec ledit point terminal de réseau de diffusion de contenu et/ou avec ledit au moins un utilisateur.

2. Système selon la revendication 1, **caractérisé en ce que** ledit médiateur de réseau de distribution est intégré dans des éléments existants dudit réseau de diffusion de contenu.

3. Système selon la revendication 2, **caractérisé en ce que** ledit instructeur LISTO est intégré dans un serveur ALTO.

4. Système selon la revendication 2, **caractérisé en ce que** ledit médiateur de réseau de distribution est intégré dans ledit contrôleur.

5. Système selon la revendication 1, **caractérisé en ce que** ladite pluralité d'interfaces externes comprend :
- une interface pour définir au moins l'interaction entre ledit instructeur LISTO et ledit contrôleur ;
- une interface pour définir au moins l'interaction entre ledit serveur LISTO et ledit instructeur LISTO ;
- une interface pour définir au moins l'interaction entre ledit serveur LISTO et ledit point terminal de réseau de diffusion de contenu ; et
- une interface pour définir au moins l'interaction entre ledit serveur LISTO et ledit au moins un utilisateur.

6. Système selon la revendication 1, **caractérisé en ce que** ledit contrôleur est l'un parmi un contrôleur CDN ou un serveur du système de nom de domaine autoritaire (DNS).

7. Procédé pour l'optimisation de distribution de contenu en direct à partir d'un réseau de diffusion de contenu, comprenant ;
la demande, par au moins un utilisateur doté d'un dispositif informatique, à un contrôleur situé dans un réseau de distribution d'un réseau de diffusion de contenu, d'un contenu multimédia en direct ; et
la réception, par ledit contrôleur, de ladite demande et l'identification d'un point terminal de réseau de diffusion de contenu prévu pour transmettre ledit contenu multimédia en direct demandé via un serveur proxy ;
le procédé étant **caractérisé en ce qu'**il comprend :
- l'identification, par un instructeur d'optimiseur de diffusion en continu en direct (LISTO) situé dans un réseau de transport connecté audit réseau de distribution, d'un serveur LISTO situé dans ledit réseau de transport afin que le serveur LISTO transmette le contenu multimédia en direct demandé audit au moins un utilisateur en agissant comme un serveur proxy, l'instructeur LISTO ayant accès à des informations relatives à la topologie du réseau de diffusion de contenu ;
- l'établissement d'une interaction entre un médiateur de réseau de distribution situé dans ledit réseau de distribution et ledit contrôleur pour rediriger le au moins un utilisateur audit serveur LISTO identifié ;
- après que ladite interaction est établie, la fourniture, par ledit médiateur de réseau de distribution, d'informations relatives audit contenu multimédia en direct demandé audit serveur LISTO et l'information en outre audit instructeur LISTO sur ledit point terminal du réseau de diffusion de contenu identifié ;
- l'envoi, par l'instructeur LISTO, d'informations reçues sur ledit point terminal de réseau de diffusion de contenu identifié au serveur LISTO ;
- la demande, par le serveur LISTO agissant comme un proxy, dudit contenu multimédia en direct audit point terminal de réseau de diffusion de contenu identifié dans un certain domaine ; et
- la transmission en outre, par ledit serveur LISTO, après avoir reçu le contenu multimédia en direct demandé à partir du point terminal de réseau de diffusion de contenu identifié, dudit contenu multimédia en direct audit au moins un utilisateur.

8. Procédé selon la revendication 7, **caractérisé en ce que** ledit contrôleur envoie audit au moins un utilisateur une commande de redirection HTTP pour recevoir le contenu multimédia en direct demandé à partir dudit serveur LISTO.

9. Procédé selon la revendication 8, **caractérisé en ce que** ledit contrôleur envoie ladite commande de redirection HTTP en parallèle audit au moins un utilisateur en même temps que ledit serveur LISTO demande ledit contenu multimédia en direct audit point terminal de réseau de diffusion de contenu identifié.

10. Procédé selon la revendication 7, **caractérisé en ce qu'**il comprend l'utilisation d'un serveur ALTO dans le cas où ledit réseau de diffusion de contenu est opéré par des tiers.

11. Procédé selon la revendication 10, **caractérisé en ce que** ledit contrôleur obtient des informations relatives à une identification dudit serveur LISTO et à un mappage optimal correspondant par rapport audit au moins un utilisateur.

12. Procédé selon la revendication 7, **caractérisé en ce qu'**il comprend la possession de seulement l'un parmi lesdits contenus multimédias en direct entre ledit point terminal de réseau de diffusion de contenu et ledit serveur LISTO.

13. Procédé selon la revendication 12, **caractérisé en ce que** ledit contenu multimédia en direct demandé est envoyé à l'utilisateur demandeur autant de fois que nécessaire.

14. Serveur optimiseur de diffusion en continu en direct (LISTO) pour la distribution optimale de contenu multimédia en direct, ledit serveur LISTO étant configuré pour agir comme un proxy pour les demandes de diffusion en continu en direct et étant situé dans un réseau de transport connectant au moins un utilisateur doté d'un dispositif informatique à un réseau de diffusion de contenu, le serveur LISTO étant apte à demander un contenu multimédia en direct à un point terminal de réseau de diffusion de contenu identifié dans un certain domaine du réseau de diffusion de contenu et à délivrer en outre ledit contenu multimédia en direct demandé audit au moins un utilisateur,
dans lequel le serveur LISTO est identifié par un instructeur LISTO situé dans le réseau de transport ayant accès à des informations relatives à la topologie du réseau de diffusion de contenu via un médiateur de distribution de contenu
dans lequel le serveur LISTO reçoit les informations relatives au contenu multimédia en direct demandé à partir d'un médiateur de réseau de distribution situé dans ledit réseau de distribution et reçoit des informations sur ledit point terminal de réseau de diffusion de contenu identifié à partir de l'instructeur LISTO, ce dernier ayant reçu lesdites informations à partir du médiateur de réseau de distribution, et
dans lequel le serveur LISTO comprend une pluralité d'interfaces externes (LU, IA/C,LR, LE) pour interagir avec ledit médiateur de réseau de distribution et/ou avec ledit instructeur LISTO et/ou avec ledit point terminal de réseau de diffusion de contenu et/ou avec ledit au moins un utilisateur.

15. Serveur LISTO selon la revendication 14, **caractérisé en ce qu'**il comprend en outre :
une pluralité de modules internes (M1..M6) chargés de réaliser une distribution optimale dudit contenu multimédia en direct ; et
une pluralité d'interfaces internes (I_{HA}, I_{HC}, I_{HU}, I_{HE}, H_{IS}, I_{U}, I_{E}) pour laisser l'interaction de ladite pluralité de modules internes (M1..M6).

16. Serveur LISTO selon la revendication 15, **caractérisé en ce que** ledit serveur LISTO est un élément individuel du réseau de transport dudit réseau de diffusion de contenu.

17. Serveur LISTO selon la revendication 15, **caractérisé en ce que** ledit serveur LISTO est mis en oeuvre dans un élément existant du réseau de transport dudit réseau de diffusion de contenu.

18. Serveur LISTO selon les revendications 16 ou 17, **caractérisé en ce que** ledit serveur LISTO est situé à une distance proche dudit au moins un utilisateur.
